# EUROPEAN PATENT APPLICATION

(11) **EP 4 800 726 A1**
(43) Date of publication of application: **02.09.2026**
(21) Application number: 23956725.8
(22) Date of filing: 23.10.2023
(51) Int. Cl.: H01G 9/035, H01G 9/145, H01G 9/15

(54) **ELECTROLYTIC CAPACITOR**

(71) Applicant: Sun Electronic Industries Corp., Shijonawate-City, Osaka 575-8585 (JP)
(72) Inventor: KAKUMA, Kenji, Shijonawate-City, Osaka 5758585 (JP)
(74) Representative: Hoffmann Eitle
(86) International application number: PCT/JP2023/038165
(87) International publication number: WO 2025/088666

(57) **Abstract**

An electrolytic capacitor 1 comprises: a body case 2; a capacitor element 10; and a sealing body 5. The capacitor element 10 is such that a positive electrode foil 11, which has an oxide film 16, and a negative electrode foil 12, which faces the positive electrode foil 11 across a separator 13, are wound on a surface thereof, and has an electrolyte layer 19, which contains a solid electrolyte 17 containing a conductive polymer and a liquid electrolyte 18 covering at least a portion of the solid electrolyte 17, between the positive electrode foil 11 and the negative electrode foil 12. The liquid electrolyte 18 contains at least an unsaturated fatty acid salt. The unsaturated fatty acid salt alone or a mixture that is the unsaturated fatty acid salt with an unsaturated fatty acid added thereto accounts for 50 wt% or greater of the liquid electrolyte 18.

## Description

### Technical Field

The present invention relates to an electrolytic capacitor having a solid electrolyte and a liquid electrolyte.

### Background Art

Patent Literature 1 discloses a conventional electrolytic capacitor. This electrolytic capacitor has a capacitor element on which an anode foil with an oxide film formed thereon, as well as a cathode foil opposed thereto, is wound via a separator. The capacitor element is housed in an exterior casing that is sealed by a sealing body. Lead terminals are connected to the anode foil and the cathode foil, respectively, so as to pass through the sealing body, being led out of the exterior casing. The capacitor element, internally having a solid-electrolyte layer formed of a conductive polymer, is impregnated with the electrolyte.

A solute of the electrolyte contains 3 to 30 wt% of at least one kind selected from among a group of aliphatic hydroxy acids and their salts. This composition contributes to decreases in equivalent series resistance (hereinafter, referred to as ESR) of electrolytic capacitors under high-temperature environments. In addition, oxidation of conductive polymers can be suppressed by virtue of oxidative-deterioration preventive action inherent in aliphatic hydroxy acids themselves.

### Citation List

### Patent Literature

Patent Document 1: JP 2018-198248 A (pages 3-9, FIG. 1)

### Summary of Invention

### Technical Problem

However, with the above-described conventional electrolytic capacitor employed, it would be the case that in long-time use (particularly, in long-time use under highertemperature conditions), solvent of a gasified electrolyte may transpire through clearances between the lead terminals or the exterior casing and the sealing body. As a result, the quantity of electrolyte within the capacitor element decreases, causing the conductive polymer to be exposed to air within the exterior casing. The conductive polymer is oxidized by oxygen in the atmosphere under a high-temperature environment, losing its conductivity to result in a lower electrical conductivity. For this reason, an increased ESR is involved in the electrolytic capacitor, which has been facing an undissolved problem that prolongation of electrolytic capacitors' service life cannot be realized.

An object of the present invention is to enable electrolytic capacitors to be prolonged in service life.

### Solution to Problem

In order to achieve the above object, the present invention provides an electrolytic capacitor comprising: a body casing with an opening provided therein; a capacitor element housed in the body casing; and a sealing body for sealing the opening of the body casing, wherein
the capacitor element has an anode foil and a cathode foil wound therearound, the anode foil having an oxide film formed on its surface, the cathode foil being opposed to the anode foil via a separator, and the capacitor element includes an electrolyte layer interposed between the anode foil and the cathode foil, the electrolyte layer including a solid electrolyte containing a conductive polymer and a liquid electrolyte with which at least part of the solid electrolyte is coated, and
the liquid electrolyte contains at least an unsaturated fatty acid salt, where the unsaturated fatty acid salt alone or a mixture of the unsaturated fatty acid salt with an unsaturated fatty acid added thereto accounts for 50 wt% of the liquid electrolyte.

The invention also provides an electrolytic capacitor of the above-described configuration, wherein the unsaturated fatty acid salt exists in a liquid state at 20°C or higher.

The invention also provides an electrolytic capacitor of the above-described configuration, wherein the liquid electrolyte contains the mixture, where used as the unsaturated fatty acid is at least one of palmitoleic acid, oleic acid, linoleic acid, eicosadienoic acid, linolenic acid, pinolenic acid, ricinoleic acid, mead acid, dihomo-γ-linolenic acid, eicosatrienoic acid, stearidonic acid, arachidonic acid, eicosatetraenoic acid, docosatetraenoic acid, bosseopentaenoic acid, eicosapentaenoic acid, osbond acid, clupanodonic acid, tetracosapentaenoic acid, nisinic acid, docosahexaenoic acid, 12-vinyl-8-octadecene diacid, and 7,12-dimethyl-7,11-octadecadiene-1,18-dicarboxylic acid.

The invention also provides an electrolytic capacitor of the above-described configuration, wherein used as a base of the unsaturated fatty acid salt is at least one of trimethylamine, N,N-dimethylbenzylamine, pyridine, N,N-dimethylaniline, aniline, 2-mercaptobenzimidazole, 1-naphthylamine, morpholine, 1,10-phenanthroline, 2,2'-bipyridyl, acetanilide, acetamide, or derivatives of these substances.

The invention also provides an electrolytic capacitor of the above-described configuration, wherein the liquid electrolyte contains a fat-soluble antioxidant.

The invention also provides an electrolytic capacitor of the above-described configuration, wherein the fat-soluble antioxidant is contained at a content of 30 wt% or less of the liquid electrolyte.

### Advantageous Effects of Invention

According to the invention, the unsaturated fatty acid salt alone or the mixture of the unsaturated fatty acid salt with the unsaturated fatty acid added thereto accounts for 50 wt% or more of the liquid electrolyte. Therefore, transpiration of the liquid electrolyte can be prevented over a long period, so that oxidative deterioration of the conductive polymer can be suppressed. Hence, increases in ESR of the electrolytic capacitor can be suppressed, making it realizable to prolong the service life of the electrolytic capacitor.

### Brief Description of Drawings

FIG. 1 is a longitudinal sectional view showing an electrolytic capacitor according to an embodiment of the present invention;
FIG. 2 is a perspective view showing a capacitor element of the electrolytic capacitor according to the embodiment of the invention;
FIG. 3 is a partly enlarged sectional view showing the capacitor element of the electrolytic capacitor according to the embodiment of the invention;
FIG. 4 is a chart showing time variations of ESR in Examples and Comparative Examples of the invention; and
FIG. 5 is a chart in which a part of FIG. 4 where the ESR of FIG. 4 falls within a range of 10 to 1000 mΩ is shown in enlargement.

### Description of Embodiments

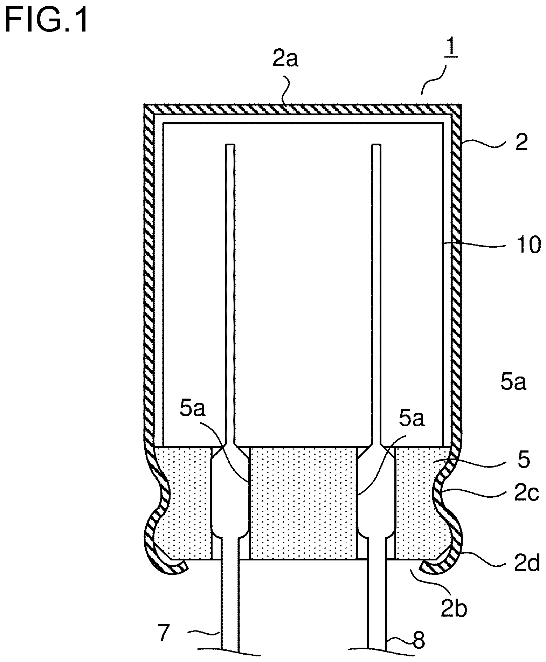

Hereinbelow, an embodiment of the present invention will be described with reference to the accompanying drawings. FIG. 1 is a longitudinal sectional view showing an electrolytic capacitor 1 according to one embodiment. The electrolytic capacitor 1 includes a body casing 2, a capacitor element 10, and a sealing body 5.

The body casing 2 is formed into a circular-in-section bottomed cylindrical shape from metal such as aluminum or resin, with its axial one end closed by a closing surface 2a and the other end opened by an opening 2b. The body casing 2 is preferably formed from aluminum in terms of workability and sealing performance.

The sealing body 5 is formed into a disc shape by a molded product of a dielectric elastic body such as butyl rubber or ethylene-propylene rubber, and has a pair of through holes 5a. Lead terminals 7, 8 of the capacitor element 10 are inserted into the pair of through holes 5a by press fit. As a result, the lead terminals 7, 8 are led out of the sealing body and connected to a circuit board (not shown) with solder or the like.

The capacitor element 10 is housed in the body casing 2, and the sealing body 5 is placed at the opening 2b. With the sealing body 5 set at the opening 2b of the body casing 2, the body casing 2 is subjected to drawing process that involves pressing an outer circumferential surface of the body casing 2. As a result, a drawing-processed portion 2c is formed so as to protrude inward of the body casing 2. The outer circumferential surface of the sealing body 5 is compressed inner-circumferentially by the drawing-processed portion 2c so as to be brought into close contact with the inner circumferential surface of the body casing 2. Further, by the compression of the sealing body 5, inner surfaces of the through holes 5a are brought into close contact with the lead terminals 7, 8. Thus, the opening 2b of the body casing 2 is sealed by the sealing body 5.

A one-side end portion of the body casing 2 closer to the opening 2b has a bent portion 2d formed by being curved against the sealing body 5. The bent portion 2d and the drawing-processed portion 2c prevents the sealing body 5 from being moved out of the body casing 2.

In addition, a well-known seat plate may be provided with a view to enhancing mountability to the circuit board. As the lead terminals 7, 8 are passed through the seat plate and bent radially, these bent portions can be assigned as soldering portions for the circuit board.

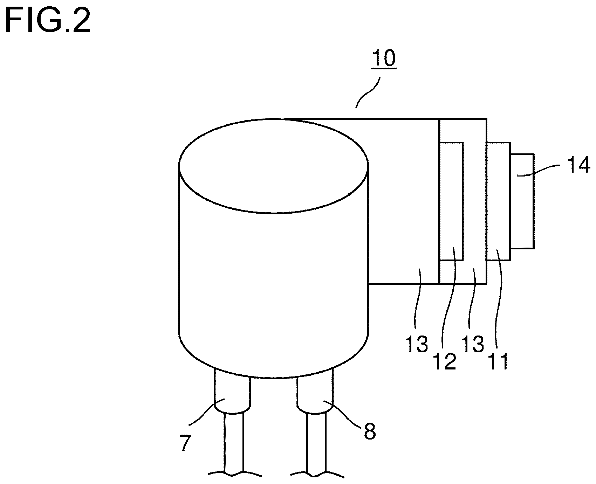

FIG. 2 is a perspective view showing the capacitor element 10. The capacitor element 10 includes an anode foil 11, a cathode foil 12, and separators 13, which are formed each into an elongated belt shape. A pair of electrode foils composed of the anode foil 11 and the cathode foil 12, which are opposed to each other via the separator 13, are wound each into a generally cylindrical shape, by which the capacitor element 10 is formed. A terminal end of the anode foil 11 or the separator 13 is fixed by adhesive tape 14.

Each separator 13 is so formed that its lateral (axial) width is larger than each lateral width of the anode foil 11 and the cathode foil 12. As a result, the separator 13 protrudes on the closing surface 2a side and the opening 2b side against the anode foil 11 and the cathode foil 12, so that short-circuits between the anode foil 11 and the cathode foil 12 are prevented.

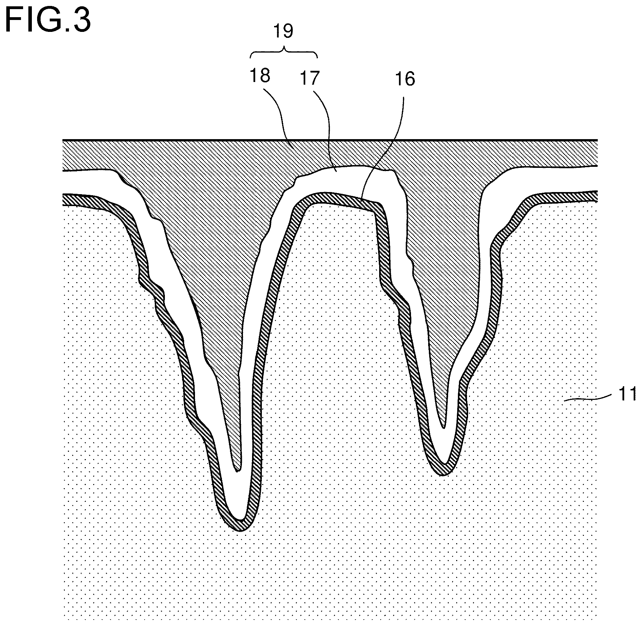

The anode foil 11 is made from a valve-action metal such as aluminum, tantalum, niobium, and titanium, with its surface coarsened by etching process. The anode foil 11, to which voltage is applied in a chemical conversion solution, has an oxide film 16 (see FIG. 3) formed thereon.

The cathode foil 12 is made from metal such as aluminum, with its surface coarsened by etching process. A conductive coating layer of carbon, titanium, or the like may be formed on the surface of the anode foil 11. Furthermore, a natural oxide film or a conversion-treated oxide film by voltage application in a chemical conversion solution may be formed on the surface of the cathode foil 12.

For the separators 13, paper made by pulpifying natural cellulose fiber, or nonwoven fabric of chemical fiber such as rayon, polyethylene terephthalate, and polyamide, is used. The separators 13 are porous and enabled to hold electrolyte in voids among internal fibers. Preferably, each separator 13 has a thickness larger than sizes of burrs or other protrusions of the anode foil 11 and the cathode foil 12, and is set to a thickness of 20 to 60 µm, as an example.

FIG. 3 is a partly enlarged sectional view showing the anode foil 11 of the capacitor element 10. An electrolyte layer 19 including a solid electrolyte 17 and a liquid electrolyte 18 is provided between the anode foil 11 and the cathode foil 12. At least part of the solid electrolyte 17 is coated with the liquid electrolyte 18. The electrolyte layer 19 is placed on a surface of the oxide film 16 of the anode foil 11, on a surface of the cathode foil 12, and on fiber surfaces of the separators 13. The solid electrolyte 17 of the electrolyte layer 19 held by the separators 13 is formed in layers on fiber surfaces, while the liquid electrolyte 18 is held in voids between fibers or in voids inside fibers.

The solid electrolyte 17 is provided by using conductive polymers doped with dopant. The conductive polymers may be polypyrrole, polythiophene, polyaniline, and derivatives of these substances. The dopant may be para-toluenesulfonic acid, polystyrenesulfonic acid, or the like. The conductive polymer may be formed by being subjected to polymerization reaction within the capacitor element 10. Instead, with a dispersion body obtained by dispersing a previously polymerized conductive polymer into water, the conductive polymer may be retained within the capacitor element 10 by making the capacitor element 10 impregnated with the dispersion body and subjected to drying process.

Preferably, polyethylenedioxythiophene (hereinafter, referred to as PEDOT) is used as a derivative of polythiophene, and polystyrenesulfonic acid (hereinafter, referred to as PSS) is used as a dopant. By doing so, the solid electrolyte 17 can be formed of a conductive-polymer dispersion body superior in electrical conductivity and stability.

Further, a sulfonic group, when provided in molecules as a derivative of polythiophene, can be used as a conductive polymer that is soluble to water or other solvents as a self-doping type conductive polymer. A self-doping type conductive polymer, like a conductive polymer dispersion body, can also be retained within the capacitor element 10 by making the capacitor element 10 impregnated with the conductive polymer and subjected to drying process. Such a self-doping type conductive polymer never redissolves in the later-described liquid electrolyte 18 containing an unsaturated fatty acid salt. Also, the self-doping type conductive polymer, of which moisture absorption is inhibited by the liquid electrolyte 18, is enabled to improve moisture resistance of the electrolytic capacitor 1.

The liquid electrolyte 18 contains at least an unsaturated fatty acid salt, and covers at least part of the solid electrolyte 17. The unsaturated fatty acid salt is formed by neutralizing at least part of unsaturated fatty acid contained in the capacitor element 10 with a base. As a result, the liquid electrolyte 18 contains an unsaturated fatty acid salt alone, or a mixture of an unsaturated fatty acid salt with an unsaturated fatty acid added thereto. In this case, the liquid electrolyte 18 contains 50 mass% or more of an unsaturated fatty acid salt alone or a mixture of an unsaturated fatty acid salt with an unsaturated fatty acid added thereto.

The unsaturated fatty acid salt is more liable to react with oxygen than conductive polymers so as to absorb ambient oxygen, thus capable of sustaining low level of oxygen amount around the conductive polymer coated with the liquid electrolyte 18. Also, the unsaturated fatty acid salt is considerably smaller in transpiration amount than solvents that are used for normal electrolytes. Therefore, the solid electrolyte 17 composed of the conductive polymer coated with the liquid electrolyte 18 can be prevented from oxidative deterioration over a long period.

Further, the unsaturated fatty acid salt, which is prevented from penetrating to the sealing body 5 more than unsaturated fatty acids, can be retained within the capacitor element 10 over a long period. Moreover, by the unsaturated fatty acid salt being contained in the liquid electrolyte 18, better compatibility between non-neutralized unsaturated fatty acid and later-described other components of the liquid electrolyte 18 can be obtained.

Also, with the liquid electrolyte 18 containing a solvent component, a content of 50 wt% or more of an unsaturated fatty acid salt alone or a mixture of an unsaturated fatty acid salt with an unsaturated fatty acid added thereto makes it possible to suppress transpiration of the solvent component. Furthermore, a state in which the surfaces of the conductive polymer are coated with the unsaturated fatty acid can be maintained even under a condition that the solvent component has transpired, so that the electrolytic capacitor 1 can be prolonged in service life. What is more, when the liquid electrolyte 18 contains a content of 80 wt% or more of an unsaturated fatty acid salt alone or a mixture of an unsaturated fatty acid salt with an unsaturated fatty acid added thereto, the electrolytic capacitor 1 can be prolonged even more in service life.

The unsaturated fatty acid is an aliphatic compound containing, in a molecule, a carboxy group and at least one or more double bond between two carbon atoms. The unsaturated fatty acid may be exemplified by palmitoleic acid, oleic acid, erucic acid, linoleic acid, eicosadienoic acid, docosadienoic acid, linolenic acid, pinolenic acid, ricinoleic acid, mead acid, dihomo-γ-linolenic acid, eicosatrienoic acid, stearidonic acid, arachidonic acid, eicosatetraenoic acid, docosatetraenoic acid, bosseopentaenoic acid, eicosapentaenoic acid, osbond acid, clupanodonic acid, tetracosapentaenoic acid, nisinic acid, docosahexaenoic acid, 12-vinyl-8-octadecene diacid, 7,12-dimethyl-7,11-octadecadiene-1,18-dicarboxylic acid, and the like. These unsaturated fatty acids mostly have a boiling point of over 250°C under normal pressure, and involve considerably small transpiration, so that the electrolytic capacitor 1 can be prolonged in service life.

A compound having, in a molecule, a plurality of double bonds between two carbon atoms among unsaturated fatty acids reacts with more oxygen so as to be enabled to stabilize its ESR characteristic over a long period. Thus, such compounds are preferable by virtue of their high effects for prolonged service life of the electrolytic capacitor 1.

In particular, unsaturated fatty acids containing more double bonds in a molecule, and unsaturated fatty acids having a branch structure with a side chain attached to a principal chain of molecules, mostly exist as liquids within temperature ranges from room temperature (20°C) to their respective boiling points or decomposition points. Unsaturated fatty acid salts, which are salts of those unsaturated fatty acids, are also liable to exist as liquids at room temperature (20°C) or higher, preferably.

Such unsaturated fatty acids may be exemplified by palmitoleic acid, oleic acid, linoleic acid, eicosadienoic acid, linolenic acid, pinolenic acid, ricinoleic acid, mead acid, dihomo-γ-linolenic acid, eicosatrienoic acid, stearidonic acid, arachidonic acid, eicosatetraenoic acid, docosatetraenoic acid, bosseopentaenoic acid, eicosapentaenoic acid, osbond acid, clupanodonic acid, tetracosapentaenoic acid, nisinic acid, docosahexaenoic acid, 12-vinyl-8-octadecene diacid, and 7,12-dimethyl-7,11-octadecadiene-1,18-dicarboxylic acid.

Further, compounds having a 1,4-pentadiene structure in a molecule are more preferable by virtue of a higher likelihood that hydrogen of its methylene group interposed between two double bonds is pulled out and reacts with oxygen. Such compounds may be exemplified by linoleic acid, eicosadienoic acid, docosadienoic acid, linolenic acid, pinolenic acid, mead acid, dihomo-γ-linolenic acid, eicosatrienoic acid, stearidonic acid, arachidonic acid, eicosatetraenoic acid, adrenic acid, bosseopentaenoic acid, eicosapentaenoic acid, osbond acid, clupanodonic acid, tetracosapentaenoic acid, nisinic acid, docosahexaenoic acid, and the like.

As a base to be used for the unsaturated fatty acid salt, a weakly basic organic amine is used because the unsaturated fatty acid is weakly acidic. An unsaturated fatty acid salt neutralized by an unsaturated fatty acid and a weak base, being low in transpirability like ionic liquid, has a repairability for the oxide film 16. Further, use of a base weaker in basicity than bases that are used for common ionic liquids makes it possible to suppress dedoping of conductive polymers. Thus, the characteristics can be sustained over a long period, allowing the base to be employed as the liquid electrolyte 18 being high in withstand voltage and low in transpirability. Since dedoping of the conductive polymer is suppressed, the base, in particular, has preferably a pKb of 4 or more and, more preferably, a pKb of 8 or more.

Also, preferably, a fat-soluble organic amine of high compatibility with unsaturated fatty acids is preferable by virtue of its high likelihood of formation of an unsaturated fatty acid and a salt. More specifically, usable are trimethylamine, N,N-dimethylbenzylamine, pyridine, N,N-dimethylaniline, aniline, 2-mercaptobenzimidazole, 1-naphthylamine, morpholine, 1,10-phenanthroline, 2,2'-bipyridyl, acetanilide, acetamide, caffeine, or derivatives of these substances.

Further, since the unsaturated fatty acid is weakly acidic, the base is preferably smaller in amount of substance, more preferably one half or less, relative to the unsaturated fatty acid.

The unsaturated fatty acid salt is more likely to exist in a high polarity state as unsaturated fatty acid ions, as compared with a state of the unsaturated fatty acid. Therefore, faults occurring to the oxide film 16 of the anode foil 11 can be repaired by using a small amount of water content or the like within the capacitor element 10, so that leakage current can be reduced over long periods. Thus, characteristic deterioration of the electrolytic capacitor 1 can be reduced, allowing the electrolytic capacitor 1 to be prolonged in service life.

The liquid electrolyte 18 may contain, as additives, a solvent aimed at adjusting viscosity, an electrolytic solution for facilitating repair of faulty portions of the oxide film 16, a gas absorbent for absorbing hydrogen gas due to the above-mentioned repairing action, an antioxidant for suppressing oxidative deterioration of the conductive polymer, a withstand-voltage improver for acting on surfaces of the oxide film 16 to improve the withstand voltage, an dissolution assistant for compatibilizing the unsaturated fatty acid salt and an additive with each other, and the like.

Adding a solvent to the liquid electrolyte 18 makes it possible to lower the viscosity of the liquid electrolyte 18 and thereby improve its impregnatability. Use of a high-boiling polar solvent as the solvent enhances the repairability of the oxide film 16, making it possible to improve the withstand voltage and reduce the leakage current. Also, since the solvent penetrates into the conductive polymer layer to enhance the electrical conductivity, the ESR of the electrolytic capacitor 1 can be lowered. Such a solvent as described above may be a high-boiling polar solvent such as γ-butyrolactone, sulfolane, ethylene glycol, diethylene glycol, or the like.

In addition, the solvent may be other than completely compatible with an unsaturated fatty acid salt alone or a mixture of an unsaturated fatty acid salt with an unsaturated fatty acid added thereto. Use of the solvent may be allowed on condition that at least part of the solid electrolyte 17 is coated with an unsaturated fatty acid salt alone or a mixture of an unsaturated fatty acid salt with an unsaturated fatty acid added thereto.

More preferably, the liquid electrolyte 18 contains an electrolytic solution subjected to ionic dissociation with the solute dissolved into the solvent. In this case, the oxide film 16 is enhanced even more in repairability, so that leakage current of the electrolytic capacitor 1 can be reduced to more extent.

The antioxidant added to the liquid electrolyte 18 may be a water-soluble antioxidant and/or a fat-soluble antioxidant.

It can be considered that a water-soluble antioxidant is liable to dissolve into a high-boiling polar solvent so as to directly suppress oxidation of the conductive polymer. However, a water-soluble antioxidant, when excessively increased in addition amount, would cause such influences as increased characteristic changes in withstand-voltage characteristic and durability. Therefore, the water-soluble antioxidant is preferably set to 3 wt% or less, more preferably 2 wt% or less, of the liquid electrolyte 18.

In order to exploit an antioxidation effect of the water-soluble antioxidant, the water-soluble antioxidant preferably contains 0.1 wt% or more of the liquid electrolyte 18. The water-soluble antioxidant may be exemplified by catechol, hydroquinone, resorcinol, pyrogallol, protocatechuic acid, gallic acid, or the like.

The fat-soluble antioxidant contained in the liquid electrolyte 18 easily dissolves into the unsaturated fatty acid salt alone or the mixture of an unsaturated fatty acid salt with an unsaturated fatty acid added thereto. When the fat-soluble antioxidant receives free radicals generated by the unsaturated fatty acid salt or the unsaturated fatty acid undergoing reaction with oxygen or thermal cleavage, the fat-soluble antioxidant can suppress or cancel activity of those free radicals.

Therefore, oxidative deterioration due to free radicals of the unsaturated fatty acid and the conductive polymer can be suppressed. As a consequence, the antioxidation effect of the conductive polymer can dramatically be improved on a double-action basis of oxygengas absorbability and oxidation suppression around the conductive polymer. Hence, characteristic deterioration of the electrolytic capacitor 1 can be reduced over a prolonged period.

Further, the fat-soluble antioxidant, even with its addition amount increased, never impairs repairability for faults of the oxide film 16 in the anode foil 11. As a consequence, the liquid electrolyte 18 can be heightened in degree of freedom for compositional design. The fat-soluble antioxidant, as compared with the water-soluble antioxidant, has less influences on characteristic changes in terms of withstand-voltage characteristic and durability, so that the fat-soluble antioxidant allows its amount of addition to the liquid electrolyte 18 to be set to 30 wt% or less. In order to obtain oxidation suppressing effect of the fat-soluble antioxidant, the fat-soluble antioxidant is preferably set to a content of 1 wt% or more of the liquid electrolyte 18.

The fat-soluble antioxidant partly penetrates into the sealing body 5 so as to be able to suppress deterioration of the sealing body 5. The fat-soluble antioxidant is highly compatible with the unsaturated fatty acid salt. Therefore, depending on the content of the unsaturated fatty acid salt in the liquid electrolyte 18, a balance between the fat-soluble antioxidant in the liquid electrolyte 18 and the fat-soluble antioxidant penetrating into the sealing body 5 can be adjusted.

Further, since the unsaturated fatty acid salt or the mixture of the unsaturated fatty acid salt with the unsaturated fatty acid added thereto accounts for 50 wt% or more of the liquid electrolyte 18, the fat-soluble antioxidant penetrating into the sealing body 5 is not supplied to an excessive extent. As a result, deterioration of the sealing body 5 can be suppressed over a long period, so that the electrolytic capacitor 1 can be prolonged in service life to more extent. In addition, the unsaturated fatty acid in the liquid electrolyte 18, partly penetrating into the sealing body 5, can be regarded as having a deterioration suppressing effect for the sealing body 5.

The fat-soluble antioxidant may be exemplified by retinol, β-carotene, α-carotene, β-cryptoxanthin, astaxanthin, tocopherol (α-tocopherol, β-tocopherol, γ-tocopherol, δ-tocopherol), tocotrienol (α-tocotrienol, β-tocotrienol, γ-tocotrienol, δ-tocotrienol), or the like. From a viewpoint of deterioration suppression for the sealing body 5, tocopherol being superior in penetrativity and antioxidation effect is particularly preferable.

According to this embodiment, the unsaturated fatty acid salt alone or the mixture of the unsaturated fatty acid salt with the unsaturated fatty acid added thereto accounts for 50 wt% or more of the liquid electrolyte 18. Therefore, transpiration of the liquid electrolyte 18 can be prevented over a long period, so that oxidative deterioration of the solid electrolyte 17 composed of a conductive polymer can be suppressed. Hence, increases in ESR of the electrolytic capacitor 1 can be suppressed, making it realizable to prolong the service life of the electrolytic capacitor 1.

Also, since the unsaturated fatty acid salt contained in the liquid electrolyte 18 exists in a liquid state at 20°C or more, it is possible to easily realize the liquid electrolyte 18.

Also, the unsaturated fatty acid contained in the liquid electrolyte 18 may be at least one of palmitoleic acid, oleic acid, linoleic acid, eicosadienoic acid, linolenic acid, pinolenic acid, ricinoleic acid, mead acid, dihomo-γ-linolenic acid, eicosatrienoic acid, stearidonic acid, arachidonic acid, eicosatetraenoic acid, docosatetraenoic acid, bosseopentaenoic acid, eicosapentaenoic acid, osbond acid, clupanodonic acid, tetracosapentaenoic acid, nisinic acid, docosahexaenoic acid, 12-vinyl-8-octadecene diacid, and 7,12-dimethyl-7,11-octadecadiene-1,18-dicarboxylic acid. Thus, the unsaturated fatty acid salt of the liquid state can be easily obtained at 20°C or more.

Also, a base of the unsaturated fatty acid salt contained in the liquid electrolyte 18 may be at least one of trimethylamine, N,N-dimethylbenzylamine, pyridine, N,N-dimethylaniline, aniline, 2-mercaptobenzimidazole, 1-naphthylamine, morpholine, 1,10-phenanthroline, 2,2'-bipyridyl, acetanilide, acetamide, or derivatives of these substances. As a result, it becomes possible to easily realize the liquid electrolyte 18 low in transpirability and capable of suppressing dedoping of the conductive polymer.

Also, in a case where the liquid electrolyte 18 contains a fat-soluble antioxidant, it becomes possible to suppress oxidative deterioration due to free radicals of the unsaturated fatty acid and the conductive polymer. Thus, characteristic deterioration of the electrolytic capacitor 1 can be reduced over an even longer period.

Also, in a case where the fat-soluble antioxidant is contained at 30 wt% or less of the liquid electrolyte 18, oxidative deterioration of the unsaturated fatty acid and the conductive polymer can be suppressed more reliably.

Hereinbelow, Examples constituted for evaluation of the electrolytic capacitor 1 according to the present embodiment will be described. Table 1 shows compositions of the liquid electrolyte 18 in following Examples 1 to 13 and Comparative Examples 1 and 2.

**(Table 1)**

| | COMPOSITION OF LIQUID ELECTROLYTE (wt%) | | | | | | | | | | | |
|---|---|---|---|---|---|---|---|---|---|---|---|---|
| | OLEIC ACID | LINOLEIC ACID | ARACHIDONIC ACID | ISOSTEARIC ACID | 1,10-PHENANTHROLINE | CAFFEINE | DIETHYLENE GLYCOL | γ-BUTYRO LACT ONE | SULFOLANE | BORODIS ALICYLIC ACID | TRIMET HYLAMINE | D-α-TOCOP HEROL |
| EXAMPLE 1 | 76 | - | - | - | 24 | - | - | - | - | - | - | - |
| EXAMPLE 2 | 74 | - | - | - | - | 26 | - | - | - | - | - | - |
| EXAMPLE 3 | - | 76 | - | - | 24 | - | - | - | - | - | - | - |
| EXAMPLE 4 | - | 74 | - | - | - | 26 | - | - | - | - | - | - |
| EXAMPLE 5 | - | - | 77 | - | 23 | - | - | - | - | - | - | - |
| EXAMPLE 6 | - | - | 75 | - | - | 25 | - | - | - | - | - | - |
| EXAMPLE 7 | - | 42.7 | - | - | 14.5 | - | 42.7 | - | - | - | - | - |
| EXAMPLE 8 | - | 43.1 | - | - | - | 13.8 | 43.1 | - | - | - | - | - |
| EXAMPLE 9 | 50 | - | - | - | - | - | - | 18 | 27 | 4 | 1 | - |
| EXAMPLE 10 | - | 50 | - | - | - | - | - | 18 | 27 | 4 | 1 | - |
| EXAMPLE 11 | 25 | 25 | - | - | - | - | - | 18 | 27 | 4 | 1 | - |
| EXAMPLE 12 | 50 | - | - | - | - | - | - | 29 | 12 | 4 | 1 | 4 |
| EXAMPLE 13 | - | 50 | - | - | - | - | - | 29 | 12 | 4 | 1 | 4 |
| COMPARATIVE EXAMPLE 1 | - | - | - | 76 | 24 | - | - | - | - | - | - | - |
| COMPARATIVE EXAMPLE 2 | - | - | - | | - | - | - | 36 | 54 | 8 | 2 | - |

### (Example 1)

For the electrolytic capacitor 1 of Example 1, first, lead terminals 7, 8 were connected to an anode foil 11 with an oxide film 16 formed on its surface, as well as to a cathode foil 12. Next, the two electrode foils were wound around via separators, forming a capacitor element 10 having an element size of φ6.3 mm × L7.7 mm. Then, this capacitor element 10 was immersed in an ammonium adipate aqueous solution for 30 minutes with voltage applied thereto, thereby subjected to repairing treatment.

Next, the capacitor element 10 was immersed into a conductive polymer dispersion resulting from dispersing a PEDOT and PSS composite into water. Thereafter, the capacitor element 10 was pulled up and dried at about 125°C, by which a layer of the solid electrolyte 17 composed of the conductive polymer was formed.

Next, the capacitor element 10 was impregnated with a liquid in which 76 wt% of oleic acid and 24 wt% of 1,10-phenanthroline were mixed together. Oleic acid serves as the unsaturated fatty acid, and 1,10-phenanthroline serves as the weak base. With this arrangement, the liquid electrolyte 18 containing the unsaturated fatty acid salt was formed. It is noted that the boiling point of oleic acid is 203 to 205°C (5 mmHg).

Then, the capacitor element 10 was inserted into a bottomed cylindrical-shaped body casing 2, to which the sealing body 5 was set in place, followed by caulking process to seal the sealing body 5. Thereafter, aging was done with voltage application, forming the electrolytic capacitor 1. This electrolytic capacitor 1 has a rated voltage of 25 WV and a rated capacity of 100 µF.

### (Example 2)

For the electrolytic capacitor 1 of Example 2, during formation of the liquid electrolyte 18, the capacitor element 10 was impregnated with a liquid in which 74 wt% of oleic acid and 26 wt% of caffeine were mixed together. Oleic acid is the unsaturated fatty acid, and caffeine is the weak base. The rest of Example 2 is similar to Example 1.

### (Example 3)

For the electrolytic capacitor 1 of Example 3, during formation of the liquid electrolyte 18, the capacitor element 10 was impregnated with a liquid in which 76 wt% of linoleic acid and 24 wt% of 1,10-phenanthroline were mixed together. Linoleic acid is the unsaturated fatty acid, and 1,10-phenanthroline is the weak base. The boiling point of linoleic acid is 229 to 230°C (16 mmHg). The rest of Example 3 is similar to Example 1.

### (Example 4)

For the electrolytic capacitor 1 of Example 4, during formation of the liquid electrolyte 18, the capacitor element 10 was impregnated with a liquid in which 74 wt% of linoleic acid and 26 wt% of caffeine were mixed together. Linoleic acid is the unsaturated fatty acid, and caffeine is the weak base. The rest of Example 4 is similar to Example 1.

### (Example 5)

For the electrolytic capacitor 1 of Example 5, during formation of the liquid electrolyte 18, the capacitor element 10 was impregnated with a liquid in which 77 wt% of arachidonic acid and 23 wt% of 1,10-phenanthroline were mixed together. Arachidonic acid is the unsaturated fatty acid, and 1,10-phenanthroline is the weak base. The boiling point of arachidonic acid is 169 to 171°C (0.15 mmHg). The rest of Example 5 is similar to Example 1.

### (Example 6)

For the electrolytic capacitor 1 of Example 6, during formation of the liquid electrolyte 18, the capacitor element 10 was impregnated with a liquid in which 75 wt% of arachidonic acid and 25 wt% of caffeine were mixed together. Arachidonic acid is the unsaturated fatty acid, and caffeine is the weak base. The rest of Example 6 is similar to Example 1.

### (Example 7)

For the electrolytic capacitor 1 of Example 7, during formation of the liquid electrolyte 18, the capacitor element 10 was impregnated with a liquid in which 42.7 wt% of linoleic acid, 14.5 wt% of 1,10-phenanthroline, and 42.7 wt% of diethylene glycol were mixed together. Linoleic acid is the unsaturated fatty acid, 1,10-phenanthroline is the weak base, and ethylene glycol is the high-boiling polar solvent. The size of the electrolytic capacitor 1 is φ6.3 mm × L7.7 mm, the rated voltage is 35 V, and the rated capacity is 47 µF. The rest of Example 7 is similar to Example 1.

### (Example 8)

For the electrolytic capacitor 1 of Example 8, during formation of the liquid electrolyte 18, the capacitor element 10 was impregnated with a liquid in which 43.1 wt% of linoleic acid, 13.8 wt% of caffeine, and 43.1 wt% of diethylene glycol were mixed together. Linoleic acid is the unsaturated fatty acid, caffeine is the weak base, and ethylene glycol is the high-boiling polar solvent. The rest of Example 8 is similar to Example 7.

### (Example 9)

For the electrolytic capacitor 1 of Example 9, during formation of the liquid electrolyte 18, the capacitor element 10 was impregnated with a liquid in which 50 wt% of oleic acid, 18 wt% of γ-butyrolactone, 27 wt% of sulfolane, 4 wt% of borodisalicylic acid, and 1 wt% of trimethylamine were mixed together. Oleic acid is the unsaturated fatty acid, trimethylamine is the weak base and a solute of the electrolyte, γ-butyrolactone and sulfolane are solvents of the electrolyte, and borodisalicylic acid is a solute of the electrolyte. The rest of Example 9 is similar to Example 1.

In addition, because the electrolyte and the unsaturated fatty acid were not completely compatible with each other, the electrolytic capacitor 1 was prepared by impregnating the capacitor element 10 with the electrolyte and, thereafter, further impregnating with the unsaturated fatty acid.

### (Example 10)

For the electrolytic capacitor 1 of Example 10, during formation of the liquid electrolyte 18, the capacitor element 10 was impregnated with a liquid in which 50 wt% of linoleic acid, 18 wt% of γ-butyrolactone, 27 wt% of sulfolane, 4 wt% of borodisalicylic acid, and 1 wt% of trimethylamine were mixed together. Linoleic acid is the unsaturated fatty acid, trimethylamine is the weak base and a solute of the electrolyte, γ-butyrolactone and sulfolane are solvents of the electrolyte, and borodisalicylic acid is a solute of the electrolyte. The rest of Example 10 is similar to Example 9.

### (Example 11)

For the electrolytic capacitor 1 of Example 11, during formation of the liquid electrolyte 18, the capacitor element 10 was impregnated with a liquid in which 25 wt% of oleic acid, 25 wt% of linoleic acid, 18 wt% of γ-butyrolactone, 27 wt% of sulfolane, 4 wt% of borodisalicylic acid, and 1 wt% of trimethylamine were mixed together. Oleic acid and linoleic acid are the unsaturated fatty acids, trimethylamine is the weak base and a solute of the electrolyte, γ-butyrolactone and sulfolane are solvents of the electrolyte, and borodisalicylic acid is a solute of the electrolyte. The rest of Example 11 is similar to Example 9.

### (Example 12)

For the electrolytic capacitor 1 of Example 12, during formation of the liquid electrolyte 18, the capacitor element 10 was impregnated with a liquid in which 50 wt% of oleic acid, 29 wt% of γ-butyrolactone, 12 wt% of sulfolane, 4 wt% of borodisalicylic acid, 1 wt% of trimethylamine, and 4 wt% of D-α-tocopherol were mixed together. Oleic acid is the unsaturated fatty acid, trimethylamine is the weak base and a solute of the electrolyte, γ-butyrolactone and sulfolane are solvents of the electrolyte, borodisalicylic acid is a solute of the electrolyte, and D-α-tocopherol is the fat-soluble antioxidant. The boiling point of D-α-tocopherol is 220°C (0.1 mmHg). The rest of Example 12 is similar to Example 9.

### (Example 13)

For the electrolytic capacitor 1 of Example 13, during formation of the liquid electrolyte 18, the capacitor element 10 was impregnated with a liquid in which 50 wt% of linoleic acid, 29 wt% of γ-butyrolactone, 12 wt% of sulfolane, 4 wt% of borodisalicylic acid, 1 wt% of trimethylamine, and 4 wt% of D-α-tocopherol were mixed together.

Linoleic acid is the unsaturated fatty acid, trimethylamine is the weak base and a solute of the electrolyte, γ-butyrolactone and sulfolane are solvents of the electrolyte, borodisalicylic acid is a solute of the electrolyte, and D-α-tocopherol is the fat-soluble antioxidant. The rest of Example 13 is similar to Example 9.

### (Comparative Example 1)

Further, Comparative Examples were prepared for comparison's sake. For Comparative Example 1, during formation of the liquid electrolyte 18, the capacitor element 10 was impregnated with a liquid in which 76 wt% of isostearic acid and 24 wt% of 1,10-phenanthroline were mixed together. Whereas 1,10-phenanthroline is the weak base, isostearic acid is a saturated fatty acid. The boiling point of isostearic acid is 183°C (5 mmHg). The rest of Comparative Example 1 is similar to Example 1.

### (Comparative Example 2)

For Comparative Example 2, during formation of the liquid electrolyte 18, the capacitor element 10 was impregnated with a liquid in which 36 wt% of γ-butyrolactone, 54 wt% of sulfolane, 8 wt% of borodisalicylic acid, and 2 wt% of trimethylamine were mixed together. γ-butyrolactone and sulfolane are solvents of the electrolyte, and borodisalicylic acid and trimethylamine are solutes of the electrolyte. The rest of Comparative Example 2 is similar to Example 1.

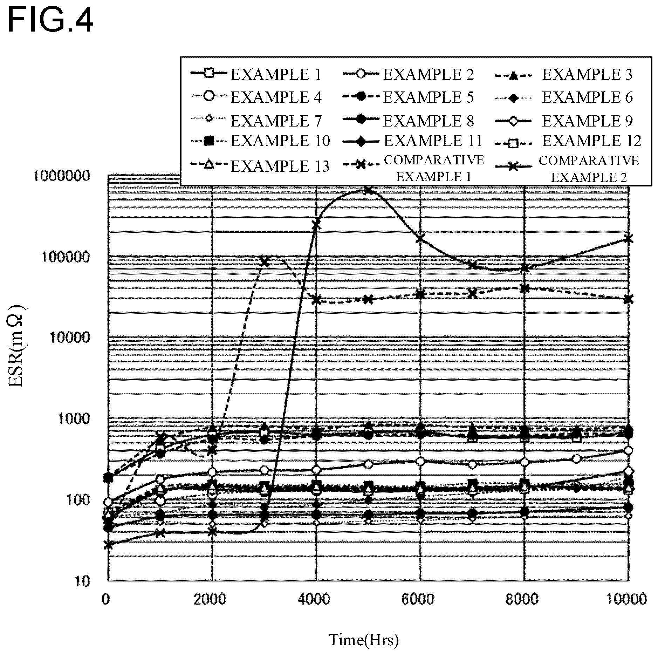

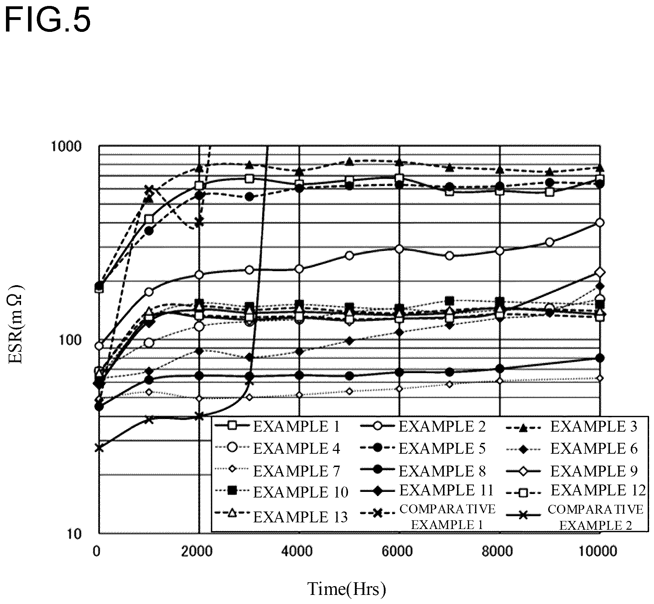

The above-described Examples and Comparative Examples were subjected to a 10000-hour durability test entailing application of rated voltage at 150°C, and resulting variations of ESR are shown in Table 2 and FIGS. 4 and 5. In FIGS. 4 and 5, the vertical axis represents ESR (unit: mΩ), while the horizontal axis represents time (unit: Hrs). For an easier understanding, FIG. 5 shows an ESR range of 10 to 1000 mΩ in FIG. 4 in enlargement.

**(Table 2)**

| | ESR(mΩ) | | | | | | | | | | |
|---|---|---|---|---|---|---|---|---|---|---|---|
| TIME | 0 | 1000 | 2000 | 3000 | 4000 | 5000 | 6000 | 7000 | 8000 | 9000 | 10000 |
| EXAMPLE 1 | 183 | 419 | 623 | 677 | 634 | 663 | 680 | 581 | 585 | 577 | 673 |
| EXAMPLE 2 | 93 | 176 | 216 | 229 | 232 | 271 | 293 | 271 | 287 | 318 | 401 |
| EXAMPLE 3 | 191 | 536 | 771 | 799 | 746 | 831 | 827 | 774 | 756 | 735 | 774 |
| EXAMPLE 4 | 68 | 96 | 117 | 124 | 127 | 139 | 144 | 137 | 142 | 145 | 162 |
| EXAMPLE 5 | 189 | 364 | 554 | 546 | 603 | 621 | 629 | 614 | 619 | 646 | 635 |
| EXAMPLE 6 | 63 | 68 | 87 | 81 | 86 | 98 | 109 | 119 | 129 | 137 | 189 |
| EXAMPLE 7 | 49 | 53 | 49 | 50 | 52 | 54 | 56 | 59 | 61 | | 63 |
| EXAMPLE 8 | 45 | 62 | 65 | 64 | 65 | 65 | 68 | 68 | 71 | | 80 |
| EXAMPLE 9 | 59 | 129 | 131 | 127 | 130 | 126 | 128 | 131 | 139 | | 223 |
| EXAMPLE 10 | 63 | 129 | 154 | 148 | 152 | 147 | 145 | 158 | 157 | | 152 |
| EXAMPLE 11 | 59 | 124 | 143 | 138 | 139 | 136 | 134 | 137 | 145 | | 135 |
| EXAMPLE 12 | 68 | 131 | 133 | 131 | 132 | 128 | 129 | 129 | 135 | | 131 |
| EXAMPLE 13 | 67 | 141 | 149 | 142 | 146 | 139 | 137 | 142 | 145 | | 141 |
| COMPARATIVE EXAMPLE 1 | 47 | 595 | 406 | 84745 | 28864 | 29198 | 33938 | 34521 | 39961 | | 29381 |
| COMPARATIVE EXAMPLE 2 | 28 | 38 | 40 | 61 | 244203 | 647759 | 166089 | 77708 | 71482 | | 164750 |

According to Table 2 and FIGS. 4 and 5, Examples 1 to 13, in each of which an unsaturated fatty acid salt or a mixture of an unsaturated fatty acid salt with an unsaturated fatty acid added thereto was contained at 50 wt% or more of the liquid electrolyte 18, proved that ESR in the durability test was maintained low. As a consequence, the ESR characteristic can be retained over a long period even under a high-temperature environment of 150°C.

Also, even in a case where the high-boiling polar solvent was added (Examples 7, 8) or where the electrolyte was contained (Examples 9 to 13), it was proved that the ESR characteristic can be maintained stable over a long period.

Further, in each electrolytic capacitor 1 of Examples 1 to 13 after the durability test, it was confirmed that the liquid electrolyte 18 remained within the capacitor element 10. Therefore, the coating of the solid electrolyte 17 of a conductive polymer with the liquid electrolyte 18 suppresses deterioration of the conductive polymer, so that an electrolytic capacitor 1 of prolonged life can be obtained.

Contrastively to the above, in Comparative Examples 1 and 2, in which no unsaturated fatty acid was contained, the ESR characteristic considerably deteriorated over a time period of 3000 to 4000 hours under a high-temperature environment of 150°C.

### Industrial Applicability

The present invention can be applied to automobiles, electronic devices, and the like in which the electrolytic capacitor is mounted in their circuitry.

### Reference Signs List

- 1: electrolytic capacitor
- 2: body casing
- 2a: closing surface
- 2b: opening
- 2c: drawing-processed portion
- 2d: bent portion
- 5: sealing body
- 5a: through hole
- 6: separator
- 7, 8: lead terminal
- 10: capacitor element
- 11: anode foil
- 12: cathode foil
- 13: separator
- 14: adhesive tape
- 16: oxide film
- 17: solid electrolyte
- 18: liquid electrolyte
- 19: electrolyte layer

## Claims

1. An electrolytic capacitor comprising: a body casing with an opening provided therein; a capacitor element housed in the body casing; and a sealing body for sealing the opening of the body casing, wherein
the capacitor element has an anode foil and a cathode foil wound therearound, the anode foil having an oxide film formed on its surface, the cathode foil being opposed to the anode foil via a separator, and the capacitor element includes an electrolyte layer interposed between the anode foil and the cathode foil, the electrolyte layer including a solid electrolyte containing a conductive polymer and a liquid electrolyte with which at least part of the solid electrolyte is coated, and
the liquid electrolyte contains at least an unsaturated fatty acid salt, where the unsaturated fatty acid salt alone or a mixture of the unsaturated fatty acid salt with an unsaturated fatty acid added thereto accounts for 50 wt% or more of the liquid electrolyte.

2. The electrolytic capacitor as claimed in claim 1, wherein the unsaturated fatty acid salt exists in a liquid state at 20°C or higher.

3. The electrolytic capacitor as claimed in claim 2, wherein the liquid electrolyte contains the mixture, where used as the unsaturated fatty acid is at least one of palmitoleic acid, oleic acid, linoleic acid, eicosadienoic acid, linolenic acid, pinolenic acid, ricinoleic acid, mead acid, dihomo-γ-linolenic acid, eicosatrienoic acid, stearidonic acid, arachidonic acid, eicosatetraenoic acid, docosatetraenoic acid, bosseopentaenoic acid, eicosapentaenoic acid, osbond acid, clupanodonic acid, tetracosapentaenoic acid, nisinic acid, docosahexaenoic acid, 12-vinyl-8-octadecene diacid, and 7,12-dimethyl-7,11-octadecadiene-1,18-dicarboxylic acid.

4. The electrolytic capacitor as claimed in claim 2, wherein used as a base of the unsaturated fatty acid salt is at least one of trimethylamine, N,N-dimethylbenzylamine, pyridine, N,N-dimethylaniline, aniline, 2-mercaptobenzimidazole, 1-naphthylamine, morpholine, 1,10-phenanthroline, 2,2'-bipyridyl, acetanilide, acetamide, or derivatives of these substances.

5. The electrolytic capacitor as claimed in any one of claims 1 to 4, wherein the liquid electrolyte contains a fat-soluble antioxidant.

6. The electrolytic capacitor as claimed in claim 5, wherein the fat-soluble antioxidant is contained at a content of 30 wt% or less of the liquid electrolyte.
